Europäisches Patentamt

European Patent Office

Office européen des brevets

(11) Veröffentlichungsnummer: **0 193 106**

**A2**

(12) # EUROPÄISCHE PATENTANMELDUNG

(21) Anmeldenummer: **86102171.5**

(22) Anmeldetag: **19.02.86**

(51) Int. Cl.⁴: **G02B 6/38**

(30) Priorität: **19.02.85 DE 3505636**

(43) Veröffentlichungstag der Anmeldung:
**03.09.86 Patentblatt 86/36**

(84) Benannte Vertragsstaaten:
**AT BE CH DE FR GB IT LI LU NL SE**

(71) Anmelder: **Standard Elektrik Lorenz Aktiengesellschaft**
**Lorenzstrasse 10**
**D-7000 Stuttgart 40(DE)**

(72) Erfinder: **Ali, Amar, Dr.**
**Belaustrasse 8**
**D-7000 Stuttgart 1(DE)**
Erfinder: **Fussgänger, Kurt, Dr.**
**Königsberger Strasse 1**
**D-7148 Remseck 2(DE)**

(74) Vertreter: **Graf, Georg Hugo, Dipl.-Ing. et al**
**c/o Standard Elektrik Lorenz AG Patent- und**
**Lizenzwesen Postfach 300 929 Kurze Strasse 8**
**D-7000 Stuttgart 30(DE)**

(54) **Optisches Bauelement.**

(57) Es wird ein bidirektionaler optischer Multiplexer und Demultiplexer, Bomudex genannt, beschrieben. Er ist als passive Vorfeldeinrichtung in einem bidirektionalen Teilnehmeranschlußsystem verwendbar. Das auf einem ersten Lichtwellenleiter 1 übertragene bidirektionale Wellenlängenmultiplex-Signal wird je nach Übertragungsrichtung durch wellenlängenselektive Mittel in einzelne Signale aufgeteilt und aus einzelnen Signalen zusammengesetzt. Jeweils ein einzelnes Signal pro Übertragungsrichtung wird durch weitere Lichtwellenleiter 5 übertragen.

Es werden drei Ausführungsbeispiele beschrieben, die sich durch die verwendeten wellenlängenselektiven Mittel - (Filter, Gitter und wellenlängenselektive Faserkoppler) unterscheiden.

Fig.1

EP 0 193 106 A2

Optisches Bauelement

Die Erfindung bezieht sich auf ein optisches Bauelement gemäß den Oberbegriffen der nebengeordneten Ansprüche 1, 4 oder 5. Ein derartiges Bauelement ist aus G.Winzer, "Wavelength Division Multiplex, a Favorable Principle?", Siemens Forschungs-und Entwicklungsberichte Bd 10 (1981) Nr. 6, S. 362 370 bekannt. Es wird im nachfolgenden "Bomudex" (Bidirektionaler Optischer Multiplexer und Demultiplexer) genannt. Es besitzt drei Anschlüsse für drei Lichtwellenleiter und enthält als wellenlängenselektives Mittel ein Kantenfilter. Ein konkretes Ausführungsbeispiel ist dort nicht beschrieben.

Aus der DE-OS 29 03 288 ist ein optischer Multiplexer und ein optischer Demultiplexer bekannt, der aufgrund der Umkehrbarkeit der Lichtausbreitung identisch denselben Aufbau hat wie der Multiplexer.

Er enthält ein Substrat aus einem optisch durchlässigen Material mit zwei zueinander parallelen Flächen auf denen optische Elemente zum Anschluß von Lichtwellenleitern vorhanden sind. Zwischen einem Teil der optischen Elemente und dem Substrat ist je ein optisches Bandpaßfilter vorhanden, das nur für eine Wellenlänge durchlässig ist. Der Strahlengang des Lichts im Substrat verläuft zickzackförmig von optischem Element zu optischem Element.

Aus Hideki Ishio et al "Review and Status of Wavelength-Division-Multiplexing Technology and Its Application", Journal of Lightwave Technology, Vol. LT-2, No. 4, August 1984, S. 448-463 ist ein Bauelement mit mehreren Anschlüssen bekannt, bei dem ein Teil der Anschlüsse Eingänge eines Multiplexers und ein anderer Teil der Anschlüsse Ausgänge eines Demultiplexers darstellen. Ein derartiger kombinierter Multiplexer und Demultiplexer wird als "Muldex" bezeichnet. Eine konkrete Ausführung ist dort nicht beschrieben.

Der Erfindung liegt die Aufgabe zugrunde, ein optisches Bauelement der eingangs genannten Art anzugeben, das zum gleichzeitigen Multiplexen und Demultiplexen von optischen Signalen vieler verschiedener Wellenlängen bei minimalen optischen Verlusten geeignet ist.

Diese Aufgabe wird durch die nebengeordneten Ansprüche 1, 4 oder 5 gelöst. Vorteilhafte Weiterbildungen sind in den Unteransprüchen enthalten.

Im Zusammenhang mit dem nebengeordneten Anspruch 5 wird erwähnt, daß zum Stand der Technik der Gittermuldex gemäß P 34 32 239 zählt.

Das neue optische Bauelement ist leicht herstellbar. Die Anzahl der Anschlüsse kann sehr groß gewählt werden. Bei Verwendung des optischen Bauelements als passive Vorfeldeinrichtung in einem Teilnehmeranschlußsystem ergeben sich sehr geringe Kosten pro Teilnehmer.

Die Erfindung wird nachstehend anhand von Ausführungsbeispielen erläutert. Es zeigt:

Fig. 1 einen "Bomudex" mit wellenlängenselektiven Filtern

Fig. 2 mehrere "Bomudex" mit wellenlängenselektiven Faserkopplern

Fig. 3 einen Gitter-Bomudex.

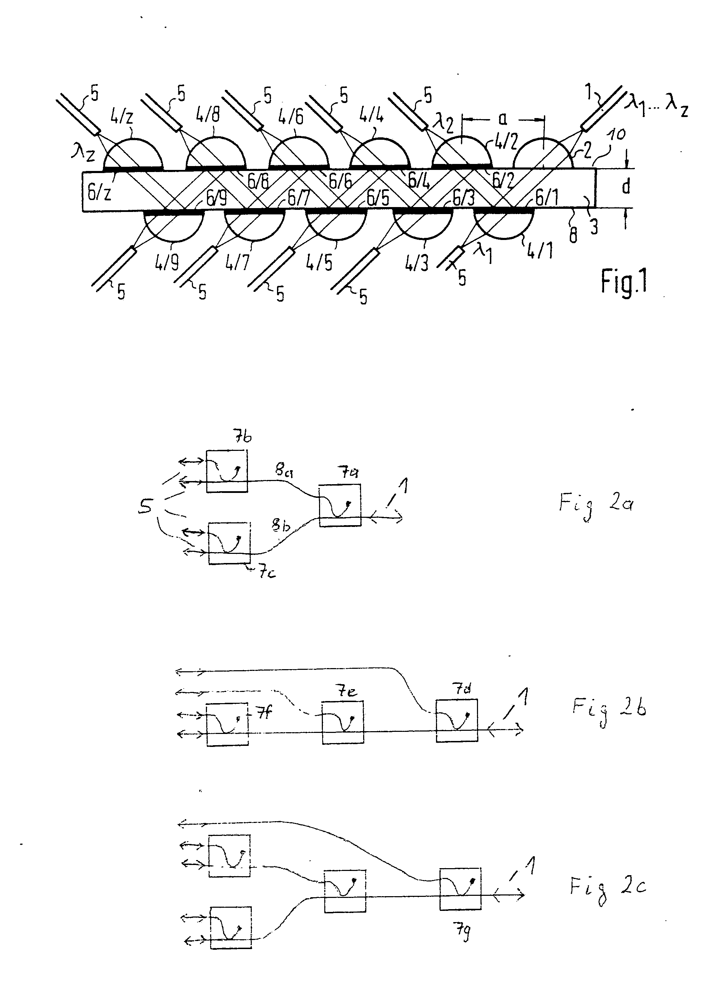

Das Ausführungsbeispiel gemäß Fig. 1 besitzt $z+1$ Anschlüsse ($z \geq 2$). Es besteht aus einem Substrat in Form eines Plättchens 3 mit der Dicke d aus einem optisch durchlässigen Material. Auf dieses Plättchen sind auf der Ober-und Unterseite 10, 8 mehrere halbkugelförmige Linsen 4/1 bis 4/z, deren ebene Flächen wellenlängenselektive Schichten 6/1 bis 6/z aufweisen, aufgebracht. Außerdem ist noch eine weitere halbkugelförmige Linse 2 aufgebracht, die keine wellenlängenselektive Schicht aufweist.

Die Wirkungsweise des Bomudex wird nun anhand seiner demultiplexenden Eigenschaften beschrieben. In analoger Weise erfolgt gleichzeitig ein Multiplexen von Licht der Wellenlängen $\lambda_1'$ bis $\lambda_{\underline{z}}'$, das sich in entgegengesetzter Richtung ausbreitet wie das zu demultiplexende Licht der Wellenlängen $\lambda_1$ bis $\lambda_z$.

Der zu demultiplexende Lichtstrahl, wird über einen Lichtwellenleiter 1 zum Bomudex geleitet. Die beim Demultiplexen erzeugten Teilstrahlen mit den Wellenlängen $\lambda_1$ bis $\lambda_z$ werden nach ihrem Austreten aus dem Bomudex über Lichtwellenleiter 5 weitergeleitet.

Beim Bomudex nach Fig. 1 weisen das Material des Plättchens 3 und der Linsen 2, 4 denselben Brechungsindex auf. Aus dem zu demultiplexenden Lichtstrahl, macht die Linse 2 einen parallelen Lichtstrahl, der unter einem Winkel von 45° gegen die Plättchenoberfläche 10 in das Plättchen 3 eindringt. Er trifft auf der anderen Plättchenseite 8 auf die wellenlängenselektive Schicht 6/1 der Linse 4/1. Diese Schicht läßt nur den Teilstrahl mit der Wellenlänge $\lambda_1$ durch und reflektiert die Teilstrahlen mit den übrigen Wellenlängen. Der parallele Teilstrahl mit der Wellenlänge $\lambda_1$ wird von der Linse 4/1 auf einen Wellenleiter 5 fokussiert.

Die Teilstrahlen mit den Wellenlängen $\lambda_2$ bis $\lambda_z$ treffen nach ihrer Reflexion an der wellenlängenselektiven Schicht 6/1 auf die wellenlängenselektive Schicht 6/2 der Linse 4/2 auf der anderen Seite des Plättchens. Diese Schicht läßt den Teilstrahl mit der Wellenlänge $\lambda_2$ durch und reflektiert die Teilstrahlen mit den Wellenlängen $\lambda_3$ bis $\lambda_z$. Der Teilstrahl mit der Wellenlänge $\lambda_2$ wird von der Linse 4/2 auf den Wellenleiter 5 fokussiert.

Dieser Vorgang -nämlich Durchlassen eines Teilstrahls mit einer bestimmten Wellenlänge und Reflexion der Teilstrahlen mit den übrigen Wellenlängen -wiederholt sich an den anderen wellenlängenselektiven Schichten 6/3 bis 6/z der Linsen 4/3 bis 4/z sinngemäß. Auf die letzte wellenlängenselektive Schicht 6/z trifft nur noch der Teilstrahl mit der Wellenlänge $\lambda_z$ auf, und dieser Teilstrahl wird von der Schicht durchgelassen. Diese Schicht 6/z ist eigentlich nicht notwendig. Sie eignet sich jedoch dazu, eventuell vorhandenes störendes Licht mit anderen Wellenlängen als $\lambda_z$ auszufiltern.

Das Licht breitet sich in dem Plättchen 3 zick-zackförmig von wellenlängenselektiver Schicht zu wellenlängenselektiver Schicht aus. Die Dicke d der Schicht ist bestimmt durch den gewünschten Strahlengang im Plättchen und dem Abstand a der Mittelpunkte zweier benachbarter Linsen.

Es ist für das Reflexions/Durchlassverhalten an den wellenlängenselektiven Schichten von Vorteil, wenn der Winkel zwischen der Ausbreitungsrichtung der Lichtstrahlen im Plättchen und den Ober/Unterseiten des Plättchen $\leq 20°$ ist. Dies hat jedoch zur Folge, daß die Teilstrahlen ebenfalls unter diesem Winkel von dem Plättchen ausgehen - (Demultiplexer) oder auf dieses auftreffen (Multiplexer) müssen. Diese Bedingung kann jedoch nicht immer erfüllt werden.

Andere Winkel zur Ein/Auskopplung der Teilstrahlen werden möglich, wenn die Materialien des Plättchens und der halbkugelförmigen Linsen unterschiedliche Brechungsindizes $n_1$ und $n_2$ aufweisen. Die beiden Brechungsindizes müssen so gewählt werden, daß die Brechung beim Übergang zwischen Linse und Plättchen so erfolgt, daß der Strahlengang im Plättchen mit den Begrenzungsflächen 10, 8 des Plättchens Winkel von ≦ 20° bilden.

Der geringste Raumbedarf ist dann gegeben, wenn die halbkugelförmigen Linsen aneinander anstoßen. Es ist dann d = a/2; mögliche Zahlenwerte: a = 3mm; d = 1,5mm. Bei dieser Anordnung wird weiterhin davon ausgegangen, daß $n_1 = n_2$ ist.

Es ist von Vorteil, die Faserenden und die Linsen mit einer Antireflexschicht zu bedampfen, da dann die Reflexionsverluste an den Glasoberflächen reduziert werden. Der Bomudex ist dabei so ausgestaltet, daß an ihn Lichtwellenleiter angekoppelt werden können. Die Abstände der Lichtleitfasern von den Linsen werden so gewählt, daß im Plättchen paralleles Licht vorhanden ist.

Die wellenlängenselektiven Schichten (6/1-6/z) reflektieren den einen Teil des auf sie auftreffenden Lichts und lassen den anderen Teil passieren. Diese Schichten können sowohl als Bandpässe als auch als Kantenfilter realisiert werden.

Werden bei der Anordnung nach Fig. 1 Kantenfilter verwendet, dann müssen deren "Kantenwellenlängen" von Linse zu Linse stetig zunehmen oder stetig abnehmen. Das Kantenfilter 6/1 der Linse 4/1 muß die Teilstrahlen mit den Wellenlängen $\lambda_2$, $\lambda_2'$ bis $\lambda_z$, $\lambda_z'$ reflektieren und darf nur den Teilstrahl mit der Wellenlänge $\lambda_1$, $\lambda_1'$ durchlassen. Das Kantenfilter 6/8 der Linse 4/8 ist für die Wellenlängen $\lambda_1$, $\lambda_1'$ bis $\lambda_8$ $\lambda_8'$ durchlässig und für die Wellenlängen $\lambda_9$, $\lambda_9'$ bis $\lambda_z$, $\lambda_z'$ reflektierend. Da die Teilstrahlen mit den Wellenlängen $\lambda_1$, $\lambda_1'$ bis $\lambda_7$, $\lambda_7'$ bereits vorher ausgekoppelt wurden, passiert nur der Teilstrahl mit der Wellenlänge $\lambda_8$, $\lambda_8'$ dieses Kantenfilter.

Anstatt der Kantenfilter können auch optische Bandpaßreflexionsfilter verwendet werden. Ein solches Filter läßt nur die Teilstrahlen $\lambda_i, \lambda_i'$ passieren, die in den Durchlaßbereich fallen. Alle übrigen Teilstrahlen werden reflektiert. Werden solche Filter verwendet, dann ist es ohne Bedeutung, in welcher Reihenfolge die Filter angeordnet sind.

Bei dem obigen Ausführungsbeispiel sind die Reflexionsfilter auf die Linsen aufgebracht. In diesem Fall werden bei der Herstellung zuerst die halbkugelförmigen Linsen mit den wellenlängenselektiven Schichten versehen und danach die so beschichteten Linsen auf das Plättchen aufgebracht. Es ist jedoch auch möglich, die wellenlängenselektiven Schichten direkt auf das Substrat aufzubringen.

Fig. 2 zeigt mehrere Bomudex, die aus mehreren Bomudex-Elementen 7 zusammengesetzt sind. Jedes Bomudex-Element 7 besteht aus einem wellenlängenselektiven Faserkoppler. Die Faserkoppler können in Baumstruktur (Fig. 2a), Reihenstruktur (Fig. 2b) oder einer Mischstruktur (Fig. 2c) angeordnet sein. In allen Fällen ist die Anzahl der Anschlüsse des Bomudex um zwei größer als die Anzahl der benötigten Bomudex-Elemente 7. So besitzen die in Fig. 2a, b dargestellten Bomudex fünf Anschlüsse für fünf Lichtwellenleiter, von denen der Lichtwellenleiter, der die zu demultiplexenden und die gemultiplexten Signale weiterleitet analog zu Fig. 1 mit dem Bezugszeichen 1 und die anderen mit 5 bezeichnet sind.

Die Wirkungsweise der Bomudex wird auch hier nur anhand des Demultiplexens von durch den Lichtwellenleiter 1 zugeführtem Licht der Wellenlängen $\lambda_1$ bis $\lambda_4$ beschrieben.

Beim Bomudex gemäß Fig. 2a leitet der mit dem Lichtwellenleiter 1 verbundene Faserkoppler 7a das Licht mit den Wellenlängen $\lambda_1$, $\lambda_2$ über einen Lichtwellenleiter 8a einem Faserkoppler 7b und das Licht mit den Wellenlängen $\lambda_3$, $\lambda_4$ über einen Lichtwellenleiter 8b einem Faserkoppler 7c zu. Der Faserkoppler 7b (7c) leitet das Licht mit der Wellenlänge $\lambda_1$ ($\lambda_3$) dem ersten (dritten) Lichtwellenleiter 5 und das Licht der Wellenlänge $\lambda_2$ ($\lambda_4$) dem zweiten (vierten) Lichtwellenleiter 5 zu.

Beim Bomudex gemäß Fig. 2b leitet der mit dem Lichtwellenleiter 1 verbundene Faserkoppler 7d das Licht der Wellenlänge $\lambda_1$ dem ersten Lichtwellenleiter 5 und das restliche Licht dem zweiten Faserkoppler 7e zu. Dieser leitet das Licht der Wellenlänge $\lambda_2$ dem zweiten Lichtwellenleiter 5 und das restliche Licht dem dritten Faserkoppler 7f zu. Dieser leitet das Licht der Wellenlänge $\lambda_3$, $\lambda_4$ zum dritten bzw. vierten Anschluß.

Der Bomudex gemäß Fig. 2c enthält 4 Bomudex-Elemente 7 und sechs Anschlüsse. Er besteht aus einem Faserkoppler 7g der dem Faserkoppler 7d von Fig. 2b entspricht und drei weiteren Faserkopplern in einer Anordnung gemäß Fig. 2a.

Aus dem oben gesagten ist zu entnehmen, daß sich die Faserkoppler 7a-7g bezüglich ihrer wellenlängenselektiven Eigenschaften voneinander unterscheiden, und zwar je nach den verwendeten Lichtwellenlängen $\lambda_1$ bis $\lambda_z$ und ihrer Anordnung innerhalb des Bomudex.

Der Grundgedanke, einen Bomudex aus einzelnen Bomudex-Elementen aufzubauen, ist nicht auf die Verwendung von Faserkopplern beschränkt. Es können auch andere Bomudex-Elemente, beispielsweise die in den anderen Ausführungsbeispielen beschriebenen, zu einem Bomudex kombiniert sein, bei dem die Anzahl der Anschlüsse des Bomudex wie auch die der Bomudex-Elemente beliebig gewählt sein können.

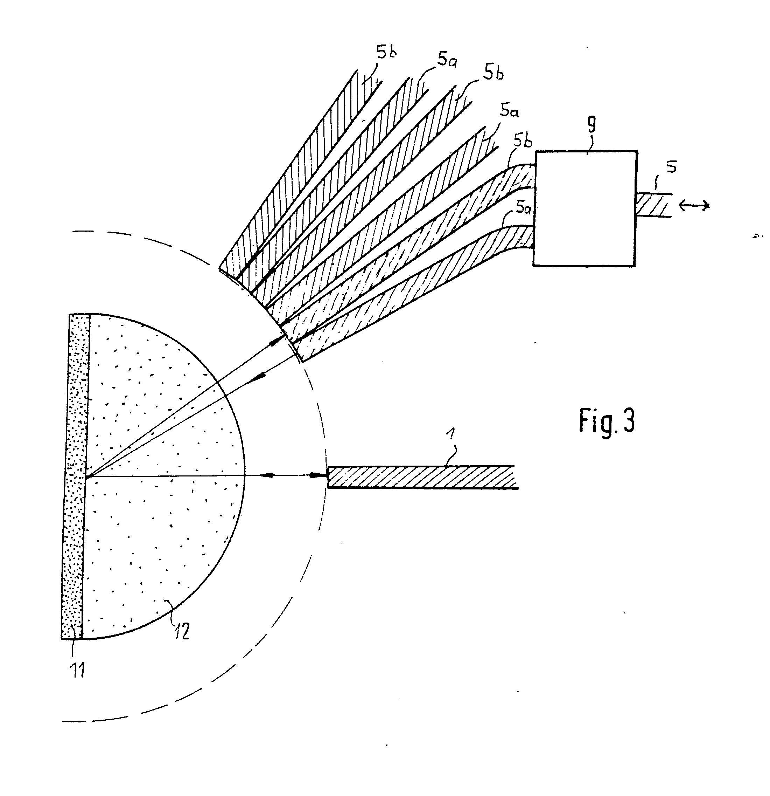

Fig. 3 zeigt einen Bomudex, der aus einem Gittermuldex und mehreren Kopplern 9 besteht. Der Gittermuldex enthält eine halbkugelförmige Linse 12 auf deren ebene Fläche ein Reflexionsgitter 11 aufgebracht ist. Weiterhin sind eine einzelne Lichtleitfaser 1 und eine Gruppe von Lichtleitfasern 5a, 5b vorgesehen. Beim Multiplexen werden die einzelnen Strahlen, die zur Übertragung zusammengefaßt werden sollen, dem Muldexer über die Lichtleitfasern 5a zugeführt und der Lichtstrahl, der aus Teilstrahlen unterschiedlicher Wellenlängen besteht, wird über die Lichtleitfaser 1 weitergeleitet. Gleichzeitig wird beim Demultiplexen der Lichtstrahl, der in seine Komponenten, die voneinander unterschiedliche Wellenlängen aufweisen, aufgeteilt werden soll, über die Lichtleitfaser 1 dem Muldexer zugeführt und die einzelnen Komponenten werden über die Lichtleitfasern 5b weitergeleitet. Jeweils zwei Lichtwellenleiter 5a und 5b sind über einen Koppler 9 mit einem Anschluß des Bomudex über einen Lichtwellenleiter 5 verbunden.

Es ist nicht erforderlich, daß jeweils benachbarte Lichtwellenleiter 5a, b mit einem der Koppler 9 verbunden sind, wie es in Fig. 3 dargestellt ist. Zur Erhöhung der Nachbarkanalselektion kann es vorteilhaft sein eine andere Ausführung zu wählen.

Die Koppler 9 sind wellenlängenselektive oder nicht wellenlängenselektive Faserkoppler oder Filterkoppler oder Gitterkoppler.

Bei den bisherigen Ausführungsbeispielen wurde davon ausgegangen, daß es sich bei den beiden Wellenlängen $\lambda_i, \lambda_i'$ um verschiedene Wellenlängen handelt. Bidirektionale Nachrichtenübertragung ist aber auch mit einer Wellenlänge $\lambda_i$ möglich. Im Falle des Ausführungsbeispiels nach Fig. 3 können dann die Koppler 9 entfallen.

In den Figuren 1 und 3 ist der mechanische Aufbau der Bomudex' nicht dargestellt. Die Lichtwellenleiter sind beispielsweise in ihrer Lage zueinander durch mindestens ein Bauteil fixiert, das V-Nuten und Mittel zur Befestigung

der Lichtwellenleiter in den V-Nuten aufweist. Beim Ausführungsbeispiel nach Fig. 1 sind die V-Nuten parallel zueinander im Abstand a angeordnet, der dem Abstand zwischen den optischen Elementen 4/1 bis 4/z entspricht. Beim Ausführungsbeispiel nach Fig. 3 sind die V-Nuten strahlenförmig angeordnet. Durch Verschieben des Bauteils relativ zu der Linse 12 oder den Linsen 4/1 bis 4/z ist eine Justierung des Bomudex durchführbar.

## Ansprüche

1. Optisches Bauelement zum gleichzeitigen Multiplexen und Demultiplexen optischer Signale unterschiedlicher Wellenlängen, mit Anschlüssen für mehrere Lichtwellenleiter, wobei an jedem Anschluß optische Signale in beiden Übertragungsrichtungen übertragbar sind, **dadurch gekennzeichnet**, daß ein Substrat (3) aus einem optisch durchlässigen Material mit zwei zueinander parallelen Flächen (10, 8) vorgesehen ist, daß auf den Flächen (10, 8) optische Elemente (4/1-4/z, 2) zum Anschluß der Lichtwellenleiter vorgesehen sind, daß zumindest zwischen einem Teil aller optischen Elemente und dem Substrat (3) wellenlängenselektive Mittel (6/1-6/z) vorhanden sind, und daß die Lagen der optischen Elemente (4/1-4/z, 2) so gewählt sind, daß der Strahlengang des Lichts in dem Substrat (3) zickzackförmig von optischem Element zu optischem Element verläuft.

2. Optisches Bauelement nach Anspruch 1, dadurch gekennzeichnet, daß die wellenlängenselektiven Mittel (6/1-6/z) Bandpaßfilter sind, die für zwei bestimmte Wellenlängen durchlässig sind und andere Wellenlängen reflektieren.

3. Optisches Bauelement nach Anspruch 1, dadurch gekennzeichnet, daß die wellenlängenselektiven Mittel (6/1-6/z) Kantenfilter sind, und daß die Kantenfilter auf unterschiedliche Wellenlängen abgestimmt sind.

4. Optisches Bauelement zum gleichzeitigen Multiplexen und Demultiplexen optischer Signale unterschiedlicher Wellenlängen, mit Anschlüssen für mehrere Lichtwellenleiter, wobei an jedem Anschluß optische Signale in beiden Übertragungsrichtungen übertragbar sind, **dadurch gekennzeichnet**, daß es einen oder mehrere wellenlängenselektive Faserkoppler (7) enthält, die derart miteinander verbunden sind, daß die Anzahl der Anschlüsse um zwei größer ist als die Anzahl der Faserkoppler.

5. Optisches Bauelement zum gleichzeitigen Multiplexen und Demultiplexen optischer Signale unterschiedlicher Wellenlängen, mit Anschlüssen für mehrere Lichtwellenleiter, wobei an jedem Anschluß optische Signale in beiden Übertragungsrichtungen übertragbar sind, **dadurch gekennzeichnet**, daß es einen kombinierten Gittermultiplexer und -demultiplexer und mehrere Richtungskoppler enthält, die zumindest zwischen einem Teil der Anschlüsse und dem kombinierten Gittermultiplexer und -demultiplexer angeordnet sind.

6. Optisches Bauelement nach Anspruch 5, dadurch gekennzeichnet, daß die Koppler wellenlängenselektive oder nicht wellenlängenselektive Faserkoppler oder Filter- oder Gitterkoppler sind.

7. Optisches Bauelement das durch Kombination mehrerer optischer Bauelemente nach einem oder mehreren der vorangehenden Ansprüche gebildet ist.

Fig.1

Fig 2a

Fig 2b

Fig 2c

0 193 106

Fig.3